# EUROPÄISCHE PATENTANMELDUNG

(11) **EP 4 071 412 A1**
(43) Veröffentlichungstag der Anmeldung: **12.10.2022**
(21) Anmeldenummer: 22161027.2
(22) Anmeldetag: 09.03.2022
(51) Int. Cl.: F24C 15/20, F24C 7/08, A47J 36/00

(54) **VERFAHREN ZUM STEUERN EINER DUNSTABZUGSVORRICHTUNG, DUNSTABZUGSVORRICHTUNG UND STEUERSYSTEM**

(30) Priorität: 08.04.2021 DE 102021203463
(71) Anmelder: BSH Hausgeräte GmbH, 81739 München (DE)
(72) Erfinder: Horst, Gerald, 76131 Karlsruhe (DE); Schaefer, Frank, 82178 Puchheim (DE); Schrumpf, Stefan, 75015 Bretten-Gölshausen (DE); Vollmar, Daniel, 76327 Pfinztal (DE)

(57) **Zusammenfassung**

Die vorliegende Erfindung betrifft ein Verfahren zum Steuern einer Dunstabzugsvorrichtung (31), das dadurch gekennzeichnet ist, dass mindestens eine Temperatur eines Kochgeschirrs (2) erfasst wird und die einzustellende Leistung der Dunstabzugsvorrichtung (31) auf der Basis der erfassten Temperatur ermittelt wird. Zudem betrifft die Erfindung eine Dunstabzugsvorrichtung (31) und ein Steuersystem (1) zur Steuerung einer Dunstabzugsvorrichtung (31).

## Beschreibung

Die vorliegende Erfindung betrifft ein Verfahren zum Steuern einer Dunstabzugsvorrichtung, eine Dunstabzugsvorrichtung und ein Steuersystem.

In heutigen Dunstabzugsvorrichtungen sind teilweise Luftgütesensoren verbaut, die anhand der Veränderung des VOC-Gehaltes (volatile organic compounds content) der Luft oder zusätzlich durch Messung der Luftfeuchtigkeit, die Betriebsstufe der Dunstabzugsvorrichtung anpassen. Diese Steuerung kann jedoch erst erfolgen, sobald die Luft den Luftgütesensor passiert. Dies hat eine unerwünscht lange Reaktionszeit zur Folge.

Zudem sind Dunstabzugsvorrichtungen bekannt, die mit einem zugeordneten Kochfeld vernetzt sind. Die Dunstabzugsvorrichtung wird entsprechend der Kochfeldeinstellung angesteuert. Bei zwei eingeschalteten Kochzonen des Kochfeldes wird die Dunstabzugsvorrichtung beispielsweise auf Stufe 2 geschaltet. Bei drei eingeschalteten Kochzonen wird die Dunstabzugsvorrichtung beispielsweise auf Stufe 3 geschaltet. Weitere Abstufungen beziehen sich beispielsweise auf die aktuelle Leistungsstufe des Kochfeldes oder auch statistische Zeitverzögerungen. Die automatische Schaltung der Dunstabzugsvorrichtung ist somit rein statistisch auf die Betriebsparameter des Kochfelds festgelegt. Der Betrieb ist somit unabhängig von tatsächlichen Wrasen-Dampf und Geruchsaufkommen.

Schließlich sind Brat- und Kochsensoren bekannt, die verwendet werden, um Kochfelder zu steuern oder die durch die Sensoren ermittelten Werte an den Benutzer weiterzuleiten.

Es ist daher Aufgabe der vorliegenden Erfindung eine Lösung zu schaffen, die auf einfache Weise ein zuverlässiges Absaugen von Wrasen von einem Kochfeld erlaubt.

Gemäß einem ersten Aspekt wird die Aufgabe gelöst durch ein Verfahren zum Steuern einer Dunstabzugsvorrichtung, das dadurch gekennzeichnet ist, dass mindestens eine Temperatur eines Kochgeschirrs erfasst wird und die einzustellende Leistung der Dunstabzugsvorrichtung auf der Basis der erfassten Temperatur ermittelt wird.

Die Dunstabzugsvorrichtung kann erfindungsgemäß eine Dunstabzugshaube sein, die oberhalb eines Kochfeldes montiert wird. Alternativ kann die Dunstabzugsvorrichtung einen Tischlüfter oder Muldenlüfter darstellen, der in oder neben dem Kochfeld montiert ist und Luft von dem Kochfeld nach unten absaugt.

Das Kochgeschirr, dessen Temperatur erfasst wird, kann beispielsweise einen Topf oder eine Pfanne darstellen. Die Temperatur des Kochgeschirrs kann durch einen Temperatursensor an dem Kochgeschirr erfasst werden. Alternativ kann die Temperatur durch das Kochfeld, auf dem das Kochgeschirr platziert ist, erfasst werden. Die erfasste Temperatur kann somit über eine Überwachungseinheit an die Dunstabzugsvorrichtung oder von dem Kochfeld an die Dunstabzugsvorrichtung übertragen werden. Alternativ kann die Temperatur unmittelbar an der Dunstabzugsvorrichtung erkannt werden.

Die einzustellende Leistung der Dunstabzugsvorrichtung kann eine Betriebsstufe der Dunstabzugsvorrichtung sein. Als einzustellende Leistung wird die Leistung bezeichnet, die zum zuverlässigen Absaugen von zu erwartendem Wrasen von dem Kochfeld erforderlich ist. Insbesondere ist die einzustellende Leistung an das zu erwartende Wrasenaufkommen angepasst.

Die einzustellende Leistung wird erfindungsgemäß auf der Basis der erfassten Kochgeschirr-Temperatur ermittelt. Die Kochgeschirr-Temperatur wird im Folgenden auch einfach als Temperatur bezeichnet. Die erfasste Temperatur wird bei der Ermittlung der einzustellenden Leistung der Dunstabzugsvorrichtung berücksichtigt. Insbesondere wird die erfasste Temperatur als Stellgröße verwendet. Zusätzlich zu der erfassten Temperatur können weitere Bedingungen berücksichtigt werden.

Indem erfindungsgemäß die tatsächliche Temperatur des Kochgeschirrs bei der Ermittlung der einzustellenden Leistung der Dunstabzugsvorrichtung berücksichtigt wird, kann die Leistung der Dunstabzugsvorrichtung präziser eingestellt werden und damit das Absaugen des Wrasens zuverlässig gewährleistet werden.

Gemäß einer Ausführungsform wird zusätzlich zu der Temperatur des Kochgeschirrs auch der Energieeintrag in das Kochgeschirr von dem Kochfeld, auf dem das Kochgeschirr platziert ist, bei der Ermittlung der einzustellenden Leistung der Dunstabzugsvorrichtung berücksichtigt.

Der Energieeintrag kann beispielsweise über eine an dem Kochfeld eingestellte Kochzonen-Betriebsstufe bestimmt werden. Zudem kann der Energieeintrag bei einem elektrischen Kochfeld beispielsweise durch die geflossene Energie zur Erwärmung bestimmt werden.

Durch die Kombination der Temperatur, beziehungsweise eines daraus ermittelbaren Temperaturverlaufs, sowie des Energieeintrags in das Gargefäß lässt sich annäherungsweise rückschließen, welche Dampf- beziehungsweise Geruchsentwicklung zu erwarten ist. Diese Verknüpfung von Energie- und Temperaturdaten ermöglicht eine angepasste und automatische Schaltung der Dunstabzugsvorrichtung. Insbesondere kann die Dunstabzugsvorrichtung entsprechend des zu erwartenden Wrasenaufkommens in eine definierte Betriebsstufe geschaltet werden.

Gemäß einer Ausführungsform wird zumindest aus der mindestens einen erfassten Temperatur eine Vorhersage des Wrasenaufkommens abgeleitet. Hierzu können Daten aus einem vorhergehenden Betrieb der Dunstabzugsvorrichtung verwendet werden. Die Vorhersage des Wrasenaufkommens muss bei dem erfindungsgemäßen Verfahren nicht beziffert werden. Vielmehr kann die Vorhersage des Wrasenaufkommens dazu verwendet werden eine geeignete Leistung der Dunstabzugsvorrichtung, beispielsweise eine Lüfterstufe einzustellen. Insbesondere kann bei der Vorhersage eines hohen Wrasenaufkommens eine höhere Leistung beziehungsweise höhere Lüfterstufe der Dunstabzugsvorrichtung eingestellt werden.

Gemäß einer Ausführungsform wird aus einer erfassten Temperatur oder einem Temperaturverlauf des Kochgeschirrs ein Rückschluss auf ein Gargut getroffen. Besonders bevorzugt wird aus der Temperatur oder dem Temperaturverlauf in Kombination mit dem Energieeintrag in das Kochgeschirr der Rückschluss auf das Gargut gezogen. Hierzu kann die Temperatur des Kochgeschirrs kontinuierlich überwacht werden. Beim Stagnieren der Temperatur bei einem hohen Energieeintrag kann beispielsweise auf einen Siedevorgang geschlossen werden, der bei Wasser oder Gargut mit hohem Wasseranteil auftritt. Gemäß einer Ausführungsform wird die Leistung der Dunstabzugsvorrichtung in Abhängigkeit des identifizierten Gargutes eingestellt. Aus dem Rückschluss auf das Gargut kann die zu erwartende Menge an Wrasen genauer vorhergesagt werden. Bei Wasser oder wasserhaltigem Gargut kann beispielsweise ein hohes Wrasenaufkommen vorhergesagt werden und die Leistung der Dunstabzugsvorrichtung entsprechend erhöht werden, bevor der Wrasen auftritt.

Gemäß einer Ausführungsform wird eine Einstellung der Leistung der Dunstabzugsvorrichtung durch den Benutzer mit einer auf der Basis der erfassten Temperatur ermittelten Leistung verglichen und bei einer Differenz wird die vom Benutzer eingestellte Leistung zur zukünftigen Verwendung gespeichert. Durch diese Ausführungsform kann ein gewünschtes Verhalten der Dunstabzugsvorrichtung vom Benutzer antrainiert werden. Wird insbesondere festgestellt, dass der Benutzer in einer Situation die Dunstabzugsvorrichtung entgegen der aufgrund von Sensormesswerten eingestellten Leistung reguliert, kann diese Präferenzen gespeichert werden. Bei einem zukünftigen Auftreten dieser Situation kann die Präferenz des Benutzers übernommen werden, auch wenn die ermittelte Leistung der Dunstabzugsvorrichtung für diese Situation abweichend ist.

Gemäß einer Ausführungsform wird bei der Ermittlung der Einstellung der Leistung der Dunstabzugsvorrichtung ein Sensorsignal eines Luftgütesensors berücksichtigt. Insbesondere kann bei dieser Ausführungsform ein automatischer Abgleich zwischen der Kochtemperatur, die durch die Kochgeschirrtemperatur ausgedrückt ist, und dem VOC-Gehalt und/oder Feuchtigkeitsgehalt des Kochwrasens durchgeführt werden, so dass eine noch genauere automatische Betriebsstufenwahl der Dunstabzugsvorrichtung erfolgt. Zusätzlich zu der Kochgeschirrtemperatur und dem VOC-Gehalt und/oder dem Feuchtigkeitsgehalt kann die Kochzonen-Betriebsstufe, die den Energieeintrag in das Kochgeschirr angibt, berücksichtigt werden.

Gemäß einer Ausführungsform wird die Temperatur des Kochgeschirrs über mindestens einen Temperatursensor an dem Kochgeschirr erfasst. Wie oben beschrieben, kann die Kochgeschirrtemperatur auf unterschiedliche Arten erfasst werden. Bei der Ausführungsform, bei der die Temperatur des Kochgeschirrs über einen Temperatursensor erfasst wird, der an dem Kochgeschirr befestigt oder in dem Kochgeschirr integriert ist, ist die Temperaturerfassung und damit der Aufbau des gesamten Steuersystems vereinfacht. Insbesondere kann der Temperatursensor die Temperatur optisch anzeigen und diese durch eine Erfassungseinheit an der Dunstabzugsvorrichtung optisch erfasst werden.

Gemäß einem weiteren Aspekt betrifft die Erfindung eine Dunstabzugsvorrichtung, die dadurch gekennzeichnet ist, dass die Dunstabzugsvorrichtung zum Ausführen des erfindungsgemäßen Verfahrens ausgelegt ist.

Vorteile und Merkmale, die bezüglich des erfindungsgemäßen Verfahrens beschrieben werden, gelten - soweit anwendbar - für die erfindungsgemäße Dunstabzugsvorrichtung und umgekehrt.

Die erfindungsgemäße Dunstabzugsvorrichtung kann eine Dunstabzugshaube sein. Die Dunstabzugsvorrichtung weist vorzugsweise zumindest eine Verarbeitungseinheit zum Verarbeiten der erfassten Temperatur und gegebenenfalls des ermittelten Energieeintrages in das Kochgeschirr sowie weiter gegebenenfalls von Sensordaten eines Luftgütesensors auf. Zudem kann die Dunstabzugsvorrichtung eine Erfassungseinheit zum Erfassen der Temperatur aufweisen. Gemäß einer Ausführungsform weist die Dunstabzugsvorrichtung zudem eine Benutzerschnittstelle auf, über die der Benutzer die Leistung der Dunstabzugsvorrichtung, beispielsweise in Form einer Lüfterstufe auswählen kann. Zudem kann die Dunstabzugsvorrichtung einen Speicher aufweisen, in dem erfasste Werte, Schwellwerte oder Präferenzen für die erfindungsgemäße Steuerung hinterlegt sein können.

Gemäß einer Ausführungsform ist die Dunstabzugsvorrichtung mit einem Kochfeld vernetzt. Bei dieser Ausführungsform kann von dem Kochfeld die eingestellte Leistungsstufe des oder der Kochzonen oder eine andere Angabe des Energieeintrages in ein auf dem Kochfeld platzierten Kochgeschirr übertragen werden.

Gemäß einer Ausführungsform umfasst die Dunstabzugsvorrichtung einen Luftgütesensor.

Gemäß einem weiteren Aspekt betrifft die Erfindung ein Steuersystem zum Steuern einer Dunstabzugsvorrichtung, das zum Ausführen des erfindungsgemäßen Verfahrens ausgelegt ist.

Vorteile und Merkmale, die bezüglich des erfindungsgemäßen Verfahrens und der erfindungsgemäßen Dunstabzugsvorrichtung beschrieben werden, gelten - soweit anwendbar - auch für das erfindungsgemäße Steuersystem und jeweils umgekehrt.

Vorzugsweise umfasst das Steuersystem zumindest eine Erfassungseinheit und mindestens einen Temperatursensor zum Erfassen der Temperatur eines Kochgeschirrs.

Das Steuersystem kann gemäß einer Ausführungsform zumindest eine Erfassungseinheit zum Erfassen der Temperatur eines Kochgeschirrs und mindestens eine Verarbeitungseinheit zu Verarbeiten der erfassten Temperatur umfassen. Zudem kann das Überwachungssystem vorzugsweise ein mit der Dunstabzugsvorrichtung verbundenes Kochfeld umfassen. Gemäß einer Ausführungsform umfasst das Steuersystem mindestens einen Luftgütesensor, der vorzugsweise an oder in der Dunstabzugsvorrichtung angeordnet ist.

Die Erfassungseinheit zum Erfassen der Temperatur des Kochgeschirrs kann an der Dunstabzugsvorrichtung angeordnet oder in die Dunstabzugsvorrichtung integriert sein.

Die vorliegende Erfindung wird im Folgenden erneut unter Bezugnahme auf die beiliegenden Figuren beschrieben. Es zeigen:
Figur 1: eine schematische Darstellung einer Ausführungsform eines erfindungsgemäßen Steuersystems;
Figur 2: eine schematische Blockdarstellung der Komponenten einer Ausführungsform eines Steuersystems; und
Figur 3: ein schematisches Flussdiagramm einer Ausführungsform des erfindungsgemäßen Verfahrens.

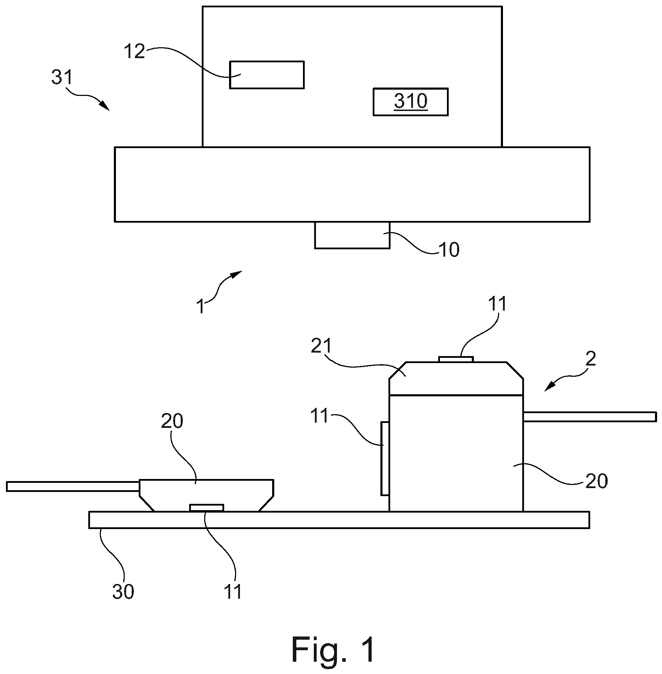

In Figur 1 ist eine schematische Darstellung eines Steuersystems 1 gemäß der vorliegenden Erfindung in einer Küche gezeigt. Das Steuersystem 1 umfasst in der gezeigten Ausführungsform eine Überwachungseinheit 10, eine Verarbeitungseinheit 310, Temperatursensoren 11 und einen Luftgütesensor 12.

Die Überwachungseinheit 10 ist in der gezeigten Ausführungsform an der Unterseite einer als Dunstabzugshaube 31 ausgestalteten Dunstabzugsvorrichtung befestigt. Alternativ kann die Überwachungseinheit 10 auch in die Dunstabzugshaube 31 integriert sein. Unterhalb der Dunstabzugshaube 31 ist ein Kochfeld 30 angeordnet, das in das Steuersystem 1 integriert sein kann. In Figur 1 sind auf dem Kochfeld 30 ein Kochgeschirr 2 in Form eines Topfes und ein Kochgeschirr 2 in Form einer Pfanne aufgestellt. An dem Kochgeschirr 2, das einen Topf darstellt, sind zwei Temperatursensoren 11 angebracht. Insbesondere ist ein Temperatursensor 11 an dem Gargefäß 20 und ein Temperatursensor 11 an dem Deckel 21 des Topfes vorgesehen. Bei dem Kochgeschirr 2, das eine Pfanne darstellt, ist der Temperatursensor 11 im Boden des Gargefäßes 2 angeordnet.

Der Luftgütesensor 12 ist in der gezeigten Ausführungsform in der Dunstabzugshaube 31 integriert.

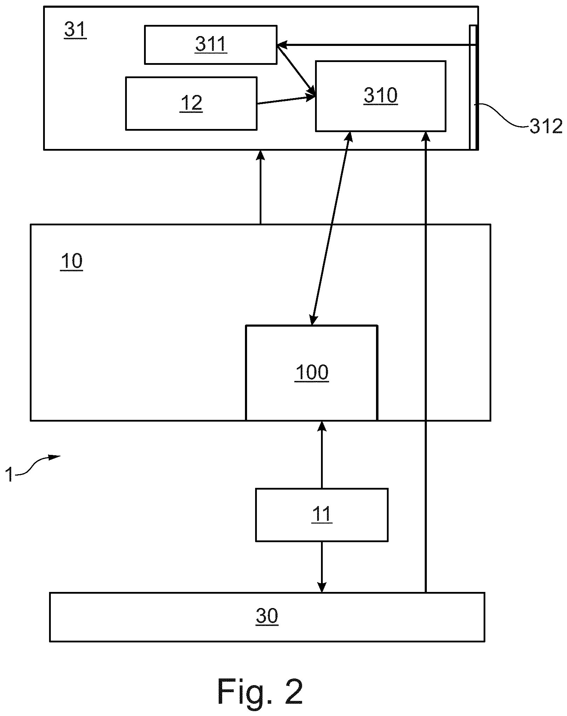

Wie sich aus Figur 2 ergibt, ist die Überwachungseinheit 10 dazu ausgelegt von dem oder den Temperatursensoren 11 Informationen zu empfangen. Die Informationen stellen die an dem Kochgeschirr 20 erfasste Temperatur dar. Die Temperatur kann beispielsweise durch optische Anzeige an dem Temperatursensor 11 und optische Erfassung durch eine Erfassungseinheit 100 der Überwachungseinheit 10, die beispielsweise eine Kamera sein kann, erfasst werden. Von der Überwachungseinheit 10 kann die erfasste Temperatur an die Dunstabzugshaube 31 übermittelt werden. Alternativ kann die Temperatur durch Übermittlung eines Temperatursensorsignals von dem Temperatursensor 11 an das Kochfeld 30 und anschließende Übermittlung vom Kochfeld 30 an die Dunstabzugshaube 31 übertragen werden.

In der in Figur 2 gezeigten Ausführungsform weist die Dunstabzugshaube 31 eine Verarbeitungseinheit 310, einen Speicher 311 und eine Benutzerschnittstelle 312 auf.

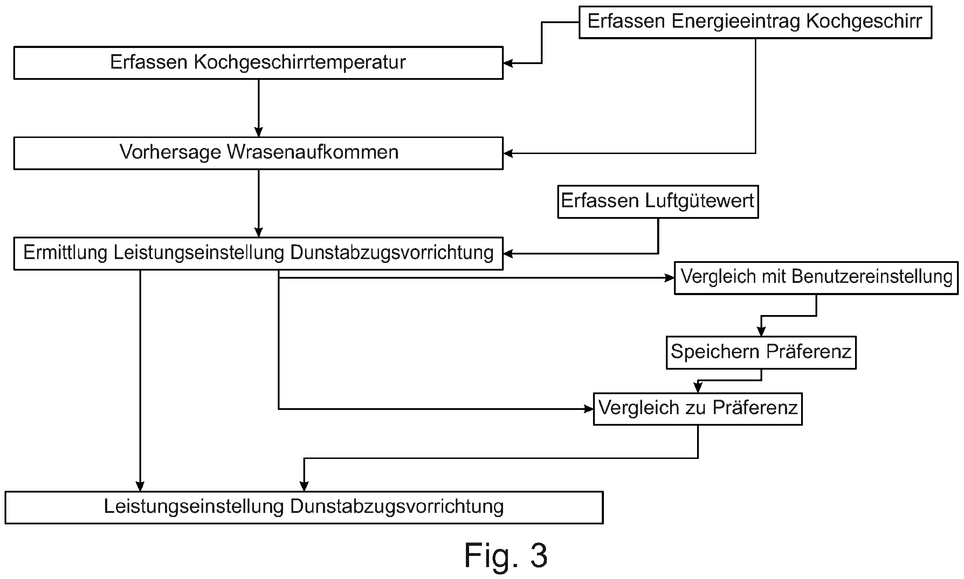

In Figur 3 ist eine Ausführungsform eines erfindungsgemäßen Verfahrens als Flussdiagramm gezeigt.

In einem ersten Schritt wird die Kochgeschirrtemperatur erfasst. Dies kann über den oder die Temperatursensoren oder durch das Kochfeld erfolgen. Die erfasste Temperatur kann in einem weiteren Schritt (nicht gezeigt) mit einem Temperaturwert verglichen werden. Der Temperaturwert kann einen Temperaturschwellwert darstellen. Alternativ kann der Temperaturwert, der mit der erfassten Temperatur verglichen wird, eine zuvor erfasste Kochgeschirrtemperatur sein. Im letzteren Fall kann ein Temperaturverlauf, insbesondere ein Temperaturabfall oder ein Temperaturanstieg ermittelt werden.

Zusätzlich kann der Energieeintrag in das Kochgeschirr ermittelt werden.

Anschließend wird aus der Temperatur, dem Temperaturverlauf und/oder dem Überschreiten eines Temperaturschwellwertes optional in Verbindung mit einem erfassten Energieeintrag in das Kochgeschirr eine Information zu dem Gargut ermittelt. Beispielsweise kann ermittelt werden, dass es sich bei dem Gargut um ein Gargut mit hohem Wassergehalt handelt, wenn die erfasste Temperatur nahe 100°C liegt. Bei einer hohen Leistungsstufe der Kochzone und einem Stagnieren der Temperatur bei etwa 100°C kann von einem Topf mit kochendem Wasser ausgegangen werden. Hierbei kann entsprechend eine starke Dampf- beziehungsweise Wrasenentwicklung erwartet beziehungsweise vorhergesagt werden.

Hierdurch kann die erforderliche Leistungseinstellung der Dunstabzugsvorrichtung ermittelt werden. Insbesondere kann die Betriebsstufe der Dunstabzugshaube auf eine der höheren Stufen durch die Gerätesteuerung im Automatikbetrieb ausgewählt werden.

Wird hingegen durch den Vergleich mit einer zuvor erfassten Temperatur ein Absinken der Temperatur des Kochgeschirrs durch einen Temperatursensor festgestellt, wird entsprechend die Betriebsstufe der Dunstabzugsvorrichtung reduziert.

Werden mehrere Kochzonen des Kochfeldes gleichzeitig betrieben, so ergibt sich eine bedingte Verschaltung der verschiedenen Kochzustände. So ist die berechnete Wrasenvorhersage eine Gesamtbewertung aller Kochzustände und des erwarteten Wrasenaufkommens und die damit verbundenen Betriebsstufe der Dunstabzugsvorrichtung wird entsprechend der Gesamtbewertung eingestellt.

Wird beispielsweise eine Temperatur von 120°C an dem Kochgeschirr ermittelt, wird davon ausgegangen, dass Öl in der Pfanne Wrasen erzeugt. Auch in diesem Fall wird die Dunstabzugsvorrichtung vorzugsweise durch den Automatikbetrieb gesteuert. Hierbei können weitere Schwellenwerte verwendet werden, die auf die Eigenschaften von Öl abgestimmt sind, so liegt beispielsweise eine wichtige Schwelle zur weiteren Betriebsstufenerhöhung bei ca. 180°C.

Wie in Figur 3 gezeigt, kann ein gewünschtes Verhalten vom Nutzer antrainiert werden. Wird erkannt, dass der Benutzer die Dunstabzugshaube anders als der aufgrund der erfassten Temperaturen ermittelten Leistungseinstellung reguliert, wird dies als Präferenz übernommen. Hierdurch kann ein Schwellwert eines vorhergesagten Wrasenaufkommens und die damit einzustellende Leistung der Dunstabzugsvorrichtung durch den Präferenzwert des Benutzers ersetzt werden. Als eine Option kann der Präferenzwert der Leistung der Dunstabzugsvorrichtung in einen vordefinierten Entscheidungsraum eingegrenzt sein.

Wie in Figur 3 schematisch angegeben, kann, wenn die Dunstabzugshaube über einen Luftgütesensor oder ähnliches verfügt, ein automatischer Abgleich zwischen Kochzonen-Betriebsstufe, Kochtemperatur und dem VOC und/oder Feuchtigkeitsgehalt des Kochwrasens durchgeführt werden, so dass eine noch genauere automatische Betriebsstufenwahl des Dunstabzugs erfolgt.

Mit der vorliegenden Erfindung wird beispielsweise das Signal eines oder mehrerer Sensoren des Kochfelds oder mit dem Kochfeld vernetzter Geräte verwendet, um die Stufe des Dunstabzugs einzustellen.

Die vorliegende Erfindung weist eine Reihe von Vorteilen auf. Gegenüber Systemen, die nur auf der eingestellten Kochstufe die Stufe des Dunstabzugs regeln, ist die vorliegende Erfindung präziser, da die tatsächliche Temperatur des Topfes oder der Pfanne zur Stellgröße wird. Im Vergleich zu Systemen, deren Regelung ausschließlich auf Grund der Luftqualität erfolgt, ist mit der vorliegenden Erfindung zudem eine kostengünstige Alternative möglich.

### Bezugszeichenliste

- 1: Steuersystem
- 10: Überwachungseinheit
- 100: Erfassungseinheit
- 11: Temperatursensor
- 12: Luftgütesensor
- 2: Kochgeschirr
- 20: Kochgefäß
- 21: Deckel
- 30: Kochfeld
- 31: Dunstabzugsvorrichtung
- 310: Verarbeitungseinheit
- 311: Speicher
- 312: Benutzerschnittstelle

## Patentansprüche

1. Verfahren zum Steuern einer Dunstabzugsvorrichtung (31), **dadurch gekennzeichnet, dass** mindestens eine Temperatur eines Kochgeschirrs (2) erfasst wird und die einzustellende Leistung der Dunstabzugsvorrichtung (31) auf der Basis der erfassten Temperatur ermittelt wird.

2. Verfahren nach Anspruch 1, wobei zusätzlich der Energieeintrag in das Kochgeschirr (2) von dem Kochfeld (30), auf dem das Kochgeschirr (2) platziert ist, bei der Ermittlung der einzustellenden Leistung der Dunstabzugsvorrichtung (31) berücksichtigt wird.

3. Verfahren nach Anspruch 2, wobei der Energieeintrag über eine an dem Kochfeld (30) eingestellte Kochzonen-Betriebsstufe bestimmt wird.

4. Verfahren nach einem der Ansprüche 1 bis 3, wobei zumindest aus der mindestens einen erfassten Temperatur eine Vorhersage des Wrasenaufkommens abgeleitet wird.

5. Verfahren nach einem der Ansprüche 1 bis 4, wobei aus einem Temperaturverlauf des Kochgeschirrs (2) ein Rückschluss auf ein Gargut getroffen wird und die Leistung der Dunstabzugsvorrichtung (31) in Abhängigkeit des identifizierten Gargutes eingestellt wird.

6. Verfahren nach einem der Ansprüche 1 bis 5, wobei eine Einstellung der Leistung der Dunstabzugsvorrichtung (31) durch den Benutzer mit einer auf der Basis der erfassten Temperatur ermittelten Leistung verglichen wird und bei einer Differenz die vom Benutzer eingestellte Leistung zur zukünftigen Verwendung gespeichert wird.

7. Verfahren nach einem der Ansprüche 1 bis 6, wobei bei der Ermittlung der Einstellung der Leistung der Dunstabzugsvorrichtung (31) ein Sensorsignal eines Luftgütesensors (12) berücksichtigt wird.

8. Verfahren nach einem der Ansprüche 1 bis 7, wobei die Temperatur über mindestens einen Temperatursensor (11) an dem Kochgeschirr (2) erfasst wird.

9. Dunstabzugsvorrichtung **dadurch gekennzeichnet, dass** die Dunstabzugsvorrichtung (31) zum Ausführen eines Verfahren nach einem der Ansprüche 1 bis 8 ausgelegt ist.

10. Dunstabzugsvorrichtung nach Anspruch 9, wobei die Dunstabzugsvorrichtung (31) mit einem Kochfeld (30) vernetzt ist.

11. Dunstabzugsvorrichtung nach einem der Ansprüche 9 oder 10, wobei die Dunstabzugsvorrichtung (31) einen Luftgütesensor (12) umfasst.

12. Steuersystem zum Steuern einer Dunstabzugsvorrichtung, **dadurch gekennzeichnet, dass** das Steuersystem (1), zum Ausführen eines Verfahrens nach einem der Ansprüche 1 bis 8 ausgelegt ist.

13. Steuersystem nach Anspruch 12, wobei das Steuersystem (1) zumindest eine Erfassungseinheit (100) und mindestens einen Temperatursensor (11) zum Erfassen der Temperatur eines Kochgeschirrs (2) umfasst.

14. Steuersystem nach Anspruch 13, wobei die Erfassungseinheit (100) zum Erfassen der Temperatur des Kochgeschirrs (2) an der Dunstabzugsvorrichtung (31) angeordnet ist oder in die Dunstabzugsvorrichtung (31) integriert ist.
